# EUROPÄISCHE PATENTSCHRIFT

(11) **EP 1 234 165 B1**
(45) Veröffentlichungstag und Bekanntmachung des Hinweises auf die Patenterteilung: **11.08.2004**
(21) Anmeldenummer: 00991141.3
(22) Anmeldetag: 01.12.2000
(51) Int. Cl.: G01N 1/40, C12Q 1/68

(54) **PROBENBEHÄLTER ZUR KONSERVIERUNG UND TROCKENLAGERUNG VON DNA-/RNA-HALTIGEM MATERIAL**
SAMPLE CONTAINER FOR CONSERVING AND DRY STORING MATERIAL CONTAINING DNA/RNA
RECIPIENT D'ECHANTILLONNAGE POUR CONSERVER ET STOCKER A SEC UNE MATIERE A BASE D'ADN/ARN

(30) Priorität: 01.12.1999 DE 19957861
(43) Veröffentlichungstag der Anmeldung: 28.08.2002
(73) Patentinhaber: Agrobiogen GmbH Biotechnologie, Larezhausen, 86567 Hilgertshausen (DE)
(72) Erfinder: Brem, Gottfried, 86567 Hilgertshausen (DE)
(74) Vertreter: Becker Kurig Straus
(86) Internationale Anmeldenummer: PCT/EP2000/012114
(87) Internationale Veröffentlichungsnummer: WO 2001/040762

(56) Entgegenhaltungen:
- GB-A- 2 290 244
- US-A- 4 146 277
- US-A- 4 350 508
- US-A- 5 139 031
- US-A- 5 958 778
- WIMPENNY JULIAN W.T.: 'Breakage of Micro-organisms' PROCESS BIOCHEMISTRY Bd. 2, Nr. 7, Juli 1997, Seiten 41 - 44

## Beschreibung

Die vorliegende Erfindung betrifft ein Verfahren zur gleichzeitigen Gewinnung und Erstbehandlung von DNA- und/oder RNA-haltigen Proben unter Verwendung eines eine hygroskopische Substanz enthaltenden Probenbehälters, der eine direkte Probenkonservierung und Zuordnung von DNA/RNA-haltigem Material am Gewinnungsort ermöglicht.

Aus den Dokumenten US-A-4146277 und US-A-4350508 sind bereits hygroskopische Substanzen enthaltenden Probenbehälter bekannt, die unter anderem zur Aufnahme und Lagerung biologischer Proben, nämlich Pflanzensamen, verwendet werden.

Ferner wird in dem Artikel "Breakage of Microorganisms" von Julian WT Wimpenny aus "Process Biochemistry", Band 2, Nr. 7, Seiten 41-44 unter anderem ein Verfahren zum Aufbrechen von Zellen durch Wasserentzug, zum Beispiel mittels einer hygroskopischen Substanz, beschrieben.

Mit dem Aufschwung molekularbiologischer Techniken und der damit einhergehenden verbesserten Möglichkeiten zur Fragestellung-orientierten Analyse werden immer mehr Proben von verschiedenen und weit auseinander liegenden Gewinnungsorten zu Labors transportiert, in denen die Durchführung der entsprechenden Analysen erfolgt.

Die Untersuchungsproben werden dabei meistens außerhalb von Labors vor Ort gewonnen. Dabei wird das Probengut, wie Blut oder Gewebe etc., unter Vermeidung von Verunreinigungen in einen geeigneten Behälter überführt und zum anschließenden Transport vorbehandelt um die Möglichkeit einer anschließenden DNA/RNA-Isolierung und -Analyse zu gewährleisten. Die Vorbehandlung kann beispielsweise Versetzen der Probe mit einem die Gerinnung verhindernden Stoff oder Kühlen auf +4 °C oder Einfrieren mittels Trockeneis oder flüssigem Stickstoff umfassen. Für das Kühlen/Einfrieren der Proben sind jedoch die entsprechenden Vorrichtungen erforderlich, wie ein Kühlschrank oder ein Behälter mit Trockeneis/flüssigem Stickstoff. Damit wird der Transport zu den Labors jedoch aufwendig und kostenintensiv, da ein Transport mit Trockeneis oder flüssigen Stickstoff als Kühlmittel zu den Gefahrenguttransporten gezählt wird. Beim Eintreffen der Proben in den Labors müssen die am Gewinnungsort provisorisch vorbehandelten Proben nach Aufteilen in Aliquots weiter behandelt werden, um diese als Rückstellproben oder für spätere Untersuchungszwecke einzulagern, ohne daß die DNA schon isoliert worden wäre.

Die vorstehend aufgeführten Probleme treten auch bei Probentransporten zwischen molekulargenetischen Labors oder bei Transporten von Sammelstellen, Erhebungseinrichtungen etc. zu den Labors auf, da die Proben in gefrorenem Zustand oder zumindest gekühlt transportiert und gelagert werden müssen.

Eine Aufgabe der vorliegenden Erfindung besteht daher darin die vorstehenden Probleme zu lösen.

Diese Aufgabe wird gelöst durch ein Verfahren gemäß Anspruch 1.

Die Figuren zeigen:

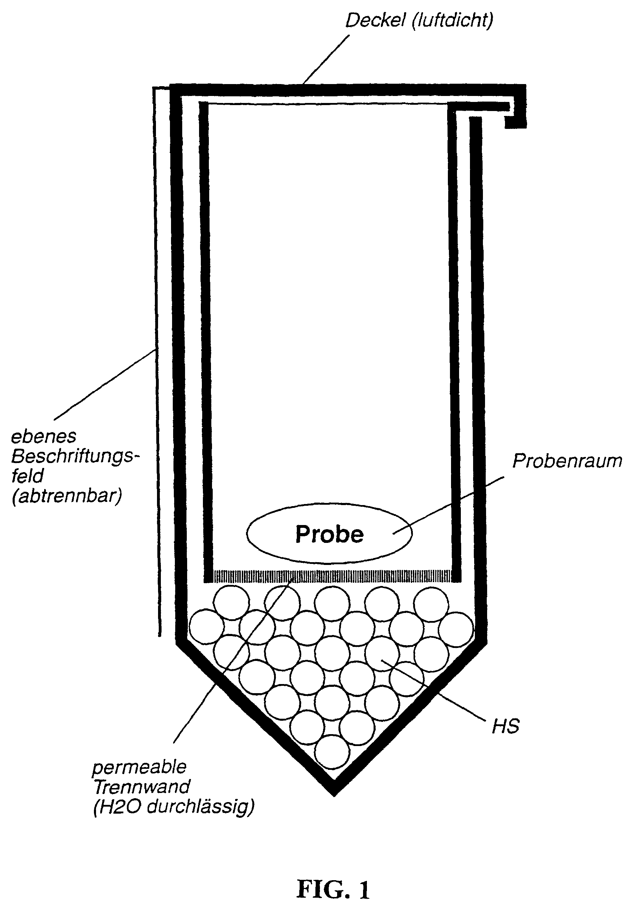

Fig. 1 zeigt eine Ausführungsform eines Probenbehälters zur Durchführung des erfindungsgemäßen Verfahrens, bei dem die hygroskopische Substanz von dem Probenraum mittels einer permeablen Trennwand abgetrennt ist.
Fig. 2 zeigt eine Ausführungsform eines solchen Probenbehälters, bei dem das hygroskopische Material in einem Bereich des Deckels integriert ist;
Fig. 3 zeigt eine weitere Ausführungsform eines solchen Probenbehälters, bei dem das hygroskopische Material am Boden des Behälters angeordnet und mit einer Trennwand von dem die Probe aufnehmenden Bereich des Behälters getrennt ist;
Fig. 4 zeigt eine weitere Ausführungsform eines solchen Probenbehälters, in Form einer Spritze.

Im Sinne der Erfindung ist der Ausdruck "im wesentlichen flüssigkeitst frei" dahingehend zu verstehen, daß der Probe keine Flüssigkeit zugesetzt wurde und diese somit nur den biologisch inhärenten Flüssigkeitsgehalt aufweist. Dieser inhärente Flüssigkeits- bzw. Wassergehalt bedingt jedoch auch bei Geweben, wie Epithelgewebe, beispielsweise Haut, immer noch daß die biologische Probe in einer kurzen Zeit durch mikrobielle oder enzymatische/lytische Vorgänge abgebaut wird.

Erfindungsgemäß werden nun die gewonnenen Proben bereits am Ort der Gewinnung vor einem derartigen Abbau geschützt, in dem das in den erfindungsgemäßen Probenbehälter überführte Material auf einen Wassergehalt getrocknet wird, bei dem die zu analysierenden Nukleinsäuren stabil sind.

Die Trocknung der Proben im Behälter erfolgt dabei erfindungsgemäß durch darin vorliegende Materialien, die so stark hygroskopisch sind, daß sie durch direkten oder indirekten Kontakt mit der in den Behälter eingebrachten Probe aktiv so stark Wasser(dampf)/Feuchtigkeit aufnehmen, daß die Probe in sehr kurzer Zeit und so weit austrocknet, so daß der Ablauf von Zersetzungs-/Abbauprozessen verhindert wird.

Die hygroskopischen Substanzen können ausgewählt werden aus der Gruppe umfassend beispielsweise Zeolithe, Silikagel, wie Silikagel E, Blaugel kompatible Solute (aus halophilen Bakterien gewonnen) Calciumcarbid, Natriumsulfat, aktivierte Tonerde (Aluminiumoxid), gesättigte Salzlösungen (Magnesiumchlorid, -hexahydrat Natriumdichromat) oder Molekularsieb. Zeolithe haben zusätzlich den Vorteil, daß sie sich bei Aufnahme von Wassermolekülen erwärmen. Dadurch kann neben dem Wasserentzug auch erreicht werden, daß gleichzeitig durch die Erwärmung Enzyme, wie Proteasen, DNAsen, oder RNAsen, vollständig bzw. zeitweise inaktiviert werden. Auch eine zusätzliche Einbringung von Sauerstoff- oder Schadstoffabsorbem ist vom Bereich der vorliegenden Erfindung umfaßt, wie beispielsweise SO₂, HCl, NH₃, organische Komponenten, Kieselgur, Polyethylen, Ca(OH)₂, saugfähige Graphitverbindungen.

Erfindungsgemäß tritt die Probe nicht mit der hygroskopischen Substanz in Kontakt. Dies kann dadurch erreicht werden, daß der Probenbehälter derart aufgebaut ist, daß die hygroskopische Substanz von einem die Probe aufnehmenden Bereich des Probenbehälters derart getrennt ist, daß zwischen der hygroskopischen Substanz und der Probe kein körperlicher Kontakt stattfindet. Die Trennung erfolgt zweckmäßigerweise durch eine wasserdurchlässige Trennwand, wobei ein Sieb, ein Netz, eine wasserdurchlässige Schicht (beispielsweise Goretex®) oder eine Membran eingesetzt werden können, so daß die hygroskopische Substanz der Probe das Wasser gut entziehen kann. Dabei kann das Trennmaterial so gewählt werden, daß es die anschliessende DNA/RNA-Isolierung unterstützt, wie beispielsweise Nitrocellulose, Resine, Dynabeads® usw.

Die Trocknung der Proben durch Wasserentzug mittels hygroskopischer Materialien hat weiterhin den Vorteil, daß die anschließende Isolation von DNA/RNA erleichtert wird, da bei einer nachfolgenden Analyse nur soviel Flüssigkeit/Pufferlösung zugeführt werden muß, wie für die Isolierung erforderlich ist. Eine Verdünnung durch Proben-interne Flüssigkeiten, wie dies beispielsweise bei Speichel-, Blut-, Harn- etc. Proben der Fall ist,kann vermieden werden. Vielmehr kann mittels des erfindungsgemäßen Verfahrens unmittelbar erreicht werden, daß durch die Trocknung bereits eine Konzentrierung für eine sich anschließende Analyse erfolgt.

Weiterhin hat sich gezeigt, daß der im Probenbehälter ablaufende Trocknungsprozeß die strukturelle Integrität der Probe bereits dahingehend beeinflußt, daß Zellen durch den Trocknungsprozeß aufgebrochen werden können, was die anschließende Isolierung von DNA bzw. RNA zur Analyse erleichtert, da Verfahrensschritte eingespart werden.

Der Probensammel- und Konservierungsbehälter (Probenbehälter) kann aus einer Vielzahl von Materialien bestehen, einschließlich beispielsweise Glas, Kunststoff, Metall, beschichtetem Papier etc.. Die einzige Voraussetzung für das für den Aufbau des Probenbehälters eingesetzte Material besteht darin, daß es im wesentlichen wasser- und luftundurchlässig ist, so daß das darin vorliegende hygroskopische Material nicht vorzeitig durch Aufnahme von Wasser(dampf)/Luftfeuchtigkeit aus der Umgebung erschöpft wird. Zudem wird dadurch verhindert, daß die einmal getrocknete Probe nicht unkontrolliert mit Luftfeuchtigkeit/ Wasser in Kontakt kommt, so daß Zersetzungsprozesse wieder einsetzen können.

Der Behälter ist mit einem Deckel verschließbar, so daß ein im wesentlichen wasserundurchlässiger Verschluß des Probenbehälters gewährleistet wird. Der Deckel kann separat oder einstückig mit dem Probenbehälter ausgebildet sein.

Gemäß einer weiteren bevorzugten Ausführungsform kann der Behälter weiter in zwei oder mehrere Bereiche unterteilt sein, wobei mindestens ein Bereich zur Aufnahme der Proben (Probenraum) und ein oder mehrere Bereiche für die Lagerung der hygroskopischen Substanz vorgesehen sind.

Durch eine derartige Aufteilung des Probenbehälters in mindestens einen Probenraum und mindestens einen Raum für die hygroskopische Substanz kann weiter gewährleistet werden, daß die Probe zur Weiterverarbeitung aus dem Probenbehälter entfernt werden kann ohne die hygroskopische Substanz mitzunehmen. Die Trennung zwischen Probenraum und hygroskopische Substanz kann dabei so ausgestaltet sein, daß sie ein Sieb, ein Netz, ein durchlässiges Gewebe, eine Membran o.ä. darstellt. Der Raum für das hygroskopische Material kann beispielsweise auch derart ausgestaltet sein, daß durch eine Verjüngung an einem Ende ein Austreten der hygroskopischen Substanz verhindert wird, während Wasser(dampf)/Luftfeuchtigkeit ungehindert durchgelangt.

Die Probe kann jedoch auch direkt mit der hygroskopischen Substanz in Kontakt kommen. In diesem Fall werden Probe und hygroskopische Substanz für die spätere Verarbeitung (DNA-Isolation) aufgrund ihrer unterschiedlichen Struktur manuell oder mechanisch voneinander getrennt oder gemeinsam weiterbearbeitet, wobei die Struktur von Probe und hygroskopische Substanz verändert werden kann (beispielsweise durch Zerreiben/Zerstossen/Mahlen etc.).

Der Probenbehälter ist weiter auch derart ausgestaltet, daß die Zerkleinerung des Probenmaterials mit einem Teil des Probenbehälters oder einem gesonderten Einmal-Gebrauchsteil durchgeführt werden kann, so daß der erste Schritt der DNA/RNA-Isolierung bereits im Probenbehälter erfolgt.

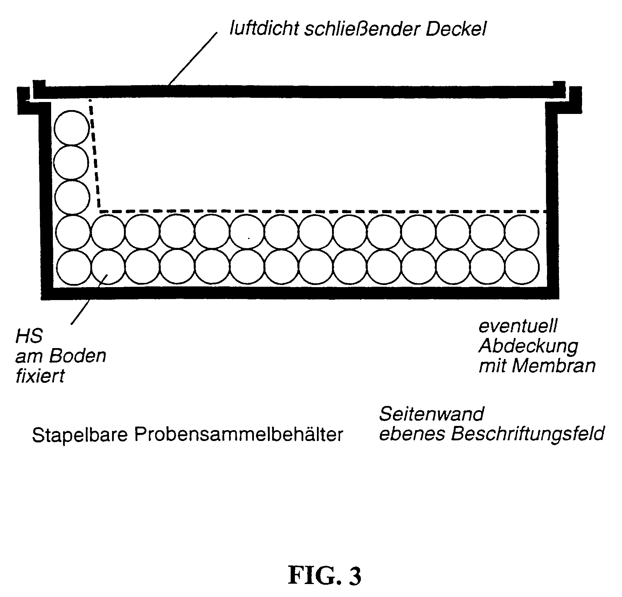

Gemäß einer weiteren bevorzugten Ausführungsform kann der Probenbehälter auch derart ausgestaltet sein, daß die hygroskopische Substanz entfernt wird und die Probe im Probenbehälter verbleibt, so daß die DNA/RNA-Isolierung in dem Probenbehälter selbst erfolgen kann. So kann beispielsweise die hygroskopische Substanz in einem einstückig mit dem Deckel des Probenbehälters ausgebildeten Bereich oder in einem an den Deckel mittels Befestigungsmitteln anbringbaren Bereich vorliegen, wobei der Deckel oder der daran angebrachte Bereich nach Trocknung durch einen anderen Deckel ersetzt wird (siehe Fig. 3).

Neben der hygroskopischen Substanz können in dem Probenbehälter auch andere Substanzen vorhanden sein, die eine anschließende Isolierung/Analyse der Nukleinsäuren erleichtern.

Der Probenbehälter kann als Einzel- oder Mehrfachsystem angelegt sein und kann eine Reihe derartiger Probenbehälter umfassen.

Um eine bessere Zuordnung der Probe zu dem Probenursprung, von dem sie gewonnen wurde, zu ermöglichen, kann der Probenbehälter weiter ein Beschriftungsfeld enthalten, das direkt beim Befüllen von Hand beschriftet oder mit einem geeigneten Drucker direkt vor/beim/nach dem Befüllen bedruckt wird, vorbedruckt ist mit einem "Barcode" oder einer Nummer bzw. neben oder anstelle einer Beschriftung auch einen elektronischen Chip oder ähnliches enthält (aufgeklebt, ins Material integriert, eingegossen oder eingebaut).

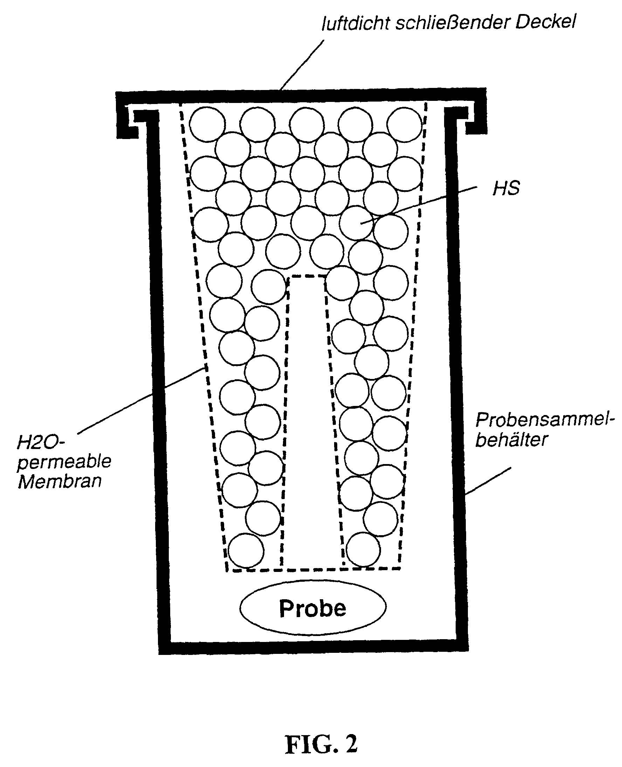

Weitere Ausführungen des Probenbehälters können sein: ein runder oder eckiger Probenbehälter, in den ein luftdicht schließender Deckel eingeführt wird, der die hygroskopische Substanz trägt. Dabei kann die hygroskopische Substanz direkt an den Deckel geklebt oder anders befestigt sein, so daß sie gegebenenfalls auch direkt mit dem Probenmaterial in Kontakt kommt. Die hygroskopische Substanz kann auch durch eine luftdicht schließende Folie abgedeckt sein, um die Substanz zu schützen. Diese Folie wird dann nach dem Einbringen der Probe und vor Verschließen des Behälters entfernt, so daß die hygroskopische Substanz das Wasser aus der Probe entziehen kann. Die hygroskopische Substanz kann aber auch in einem Luft- und Wasserdampf durchlässigen, also löcherigen Kunststoffbehälter oder in einer Art Netz eingepackt sein (Beispiel siehe Abb. 2). Diese Packung der hygroskopischen Substanz kann so gestaltet sein, daß die Oberfläche durch Einbuchtungen oder Kanäle vergrößert wird.

Weiterhin kann der Probenbehälter rund, eckig oder flach sein, mit einem luftdicht schliessenden Deckel (Beispiel siehe Abb 3). Der Deckel kann dabei derart ausgestaltet sein, daß mehrere Probenbehälter stabil aufeinander gestapelt werden können. Die Identifikation der Behälter bzw. Proben kann durch Beschriftungsfelder auf den Seiten der Probenbehälter erfolgen. Die hygroskopische Substanz befindet sich am Boden und/oder den Wänden des Probenbehälter, dergestalt, daß sie entweder durch ein Netz/Sieb/durchlässige Membran festgehalten und vom Probenmaterial getrennt sind, oder daß sie an den Wänden und Boden fixiert/angeklebt usw. ist oder bei der Produktion derart vorgefertigt wurde, daß die hygroskopische Substanz bereits selbst eine geformte Wanne o.ä. bildet, in die das Probenmaterial direkt eingelagert wird. Die hygroskopische Substanz kann aber auch an den Deckel (siehe Abb. 2) geklebt oder auf andere Art und Weise daran befestigt sein.

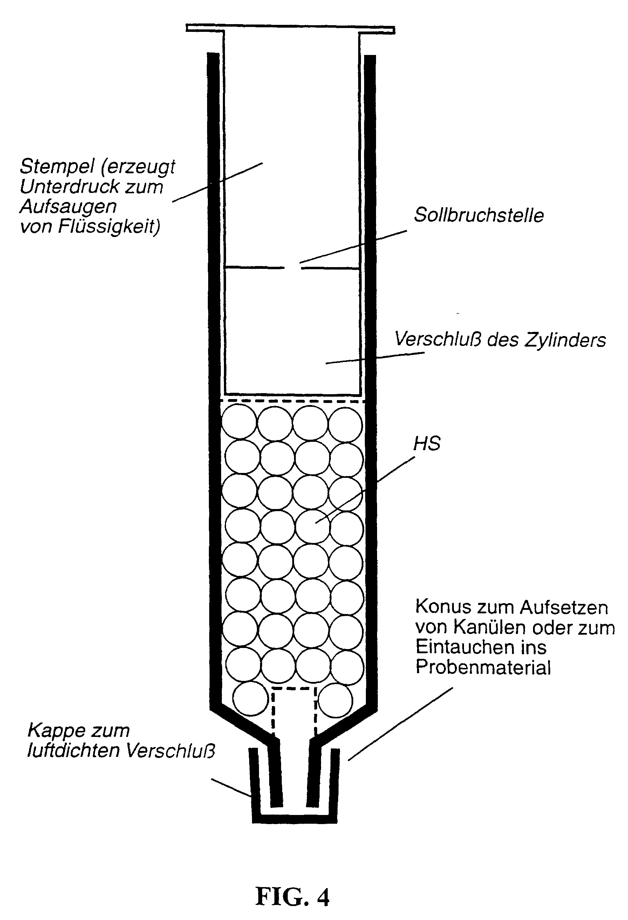

Der Behälter kann weiterhin ein zylindrischer Behälter sein, der auf der einen Seite eine Öffnung hat, durch die flüssiges oder gasförmiges Probenmaterial in den Probenbehälter eingesaugt werden kann (Beispiel siehe Abb. 4). Das Einsaugen kann durch einen dichten Stempel auf der anderen Seite des Zylinders erreicht werden. Dieser Stempel, der beim Zurückziehen ein Vakuum erzeugt, kann an einer Sollbruchstelle derart abgetrennt werden, daß beim Erreichen der Sollbruchstelle am hinteren Ende des Zylinders durch eine Kippbewegungen der Endteil des Stempels abgebrochen wird, während der vordere Teile des Stempels im Zylinder verbleibt und diesen nach hinten luftdicht verschließt. Der Verschluß auf der anderen (vorderen) Seite des Zylinders erfolgt durch eine Kappe oder durch Zuschweißen/Zukleben/Zudrücken der Öffnung o.ä.. Im Zylinder befindet sich die hygroskopische Substanz. Die hygroskopische Substanz kann dabei einfach eingefüllt oder abgetrennt sein oder einen Hohlzylinder bilden, in den das Probenmaterial eingesaugt wird. Der zylindrische Probenbehälter kann so gestaltet sein, das eine Aussenseite als plane/ebene Fläche ausgebildet wird, die als Beschriftungsfläche dient.

Die Probenbehälter können bei Transporten zu, von und zwischen Labors eingesetzt werden, zur Probenlagerung bei Umwelt-Bedingungen, wie bei Raumtemperatur und zur unmittelbaren Erstellung von Rückstellproben, d.h. Gewinnung ohne Durchführung einer Analyse bereits bei der Gewinnung.

Als Einsatzgebiete für die Probenbehälter zur Durchführung des erfindungsgemäßen Verfahrens sind insbesondere denkbar: Produktsicherung, Lebensmittelüberwachung, in-line-Qualitätsmangement, Tierzucht, Pflanzenproduktion, Medizin (Biopsien), sowie Blut-, Speichel-, Schweiss-, Harn-, Kot-, Wundsekret- Körperflüssigkeits- etc. Proben für die Forensik, Gewebe, Zellen, Embryonen, Spermien, Ökologie, Umweltüberwachung, etc.

## Patentansprüche

1. Verfahren zur gleichzeitigen Gewinnung und Erstbehandlung von DNA- und/oder RNA-haltigen Proben, bei dem
eine biologische Probe gewonnen wird,
die biologische Probe in einen Probenbehälter zur Konservierung und/oder Lagerung von biologischen Proben, enthaltend eine im Probenbehälter vorliegende, stark hygroskopische Substanz, die mit der Probe nicht in körperlichem Kontakt steht, überführt wird,
der Probenbehälter verschlossen wird,
so dass das in dem Probenbehälter vorhandene hygroskopische Material die Probe auf einen Wassergehalt austrocknet, dass die darin vorhandenen Zellen aufgebrochen werden und eine Konzentrierung der Probe für eine nachfolgende Analyse erfolgt.

2. Verfahren nach Anspruch 1, bei dem die hygroskopische Substanz ausgewählt ist aus der Gruppe umfassend, Zeolith, Silikagel oder Molekularsieb.

3. Verfahren nach einem der Ansprüche 1 oder 2, bei dem die hygroskopische Substanz von dem Probenraum durch eine wasserdurchlässige Trennwand getrennt ist.

4. Verfahren nach Anspruch 3, bei dem die wasserdurchlässige Trennwand ein Sieb, ein Netz oder eine Membran ist.

## Claims

1. A method for simultaneous collection and initial treatment of DNA- and/or RNA containing samples, wherein
a biological sample is collected,
the biological sample is transferred into a sample container for the conservation and/or storage of biological samples, containing a highly hygroscopic substance in the sample container that is not in physical contact with the sample,
the sample container is closed,
so that the hygroscopic material, that is present in the sample container desiccates the sample to a water content, so that the cells present therein are broken and a concentration of the sample for a subsequent analysis occurs.

2. The method according to claim 1, wherein the hygroscopic substance is selected from the group comprising zeolite, silica gel or molecular sieve.

3. The method according to any of the claims 1 or 2, wherein the hygroscopic substance is separated from the sample space by a water permeable separation wall.

4. The method according to claim 3, wherein the water permeable separation wall is a sieve, a net or a membrane.

## Revendications

1. Procédé d'obtention et de traitement initial simultané d'échantillons contenant de l'ADN et/ou de l'ARN, dans lequel
un échantillon biologique est obtenu,
l'échantillon biologique est transféré dans un récipient pour échantillon destiné à la conservation et/ou à l'entreposage d'échantillons biologiques contenant une substance fortement hydroscopique présente dans le récipient pour échantillon qui n'est pas en contact physique avec l'échantillon,
le récipient pour échantillon est obturé,
de sorte que le matériel hydroscopique présent dans le récipient pour échantillon dessèche l'échantillon jusqu'à une teneur en eau telle que les cellules qui y sont présentes sont brisées et qu'il s'en suit une concentration de l'échantillon pour une analyse subséquente.

2. Procédé selon la revendication 1 dans lequel la substance hygroscopique est choisie à partir du groupe comprenant zéolithe, gel de silice ou tamis moléculaire.

3. Procédé selon l'une des revendications 1 ou 2 dans lequel la substance hygroscopique est séparée de la chambre pour échantillon par une cloison perméable à l'eau.

4. Procédé selon la revendication 3, dans lequel la cloison perméable à l'eau est un tamis, un filet ou une membrane.
